# EUROPEAN PATENT APPLICATION

(11) **EP 0 737 753 A2**
(43) Date of publication of application: **16.10.1996**
(21) Application number: 96105418.6
(22) Date of filing: 04.04.1996
(51) Int. Cl.: C13F 1/02, C13G 1/00

(54) **Process for the production of sugar from raw juice of sugar beet**

(30) Priority: 14.04.1995 IT MI950777
(71) Applicant: ERIDANIA S.p.A., 16128 Genova (IT)
(72) Inventor: Vallini, Giorgio, 16146 Genova (IT); Andreoli, Franco, 46028 Semide, Mantova (IT); Mantovani, Giorgio, 44100 Ferrara (IT); Vaccari, Giuseppe, 45039 Stienta, Rovigo (IT)
(74) Representative: Porsia, Attilio, Dr.

(57) **Abstract**

Procedure for the production of sugar from raw juice of sugar beet through concentration under vacuum by feeding the juice over one or more evaporators with concentration in counter-current and with evaporation of the more diluted juice at the lower temperature, using permanence times less than 3 minutes and subsequent crystallization of the thick juice by cooling the solution

## Description

This invention relates to a process for the production of sugar from sugar beet.

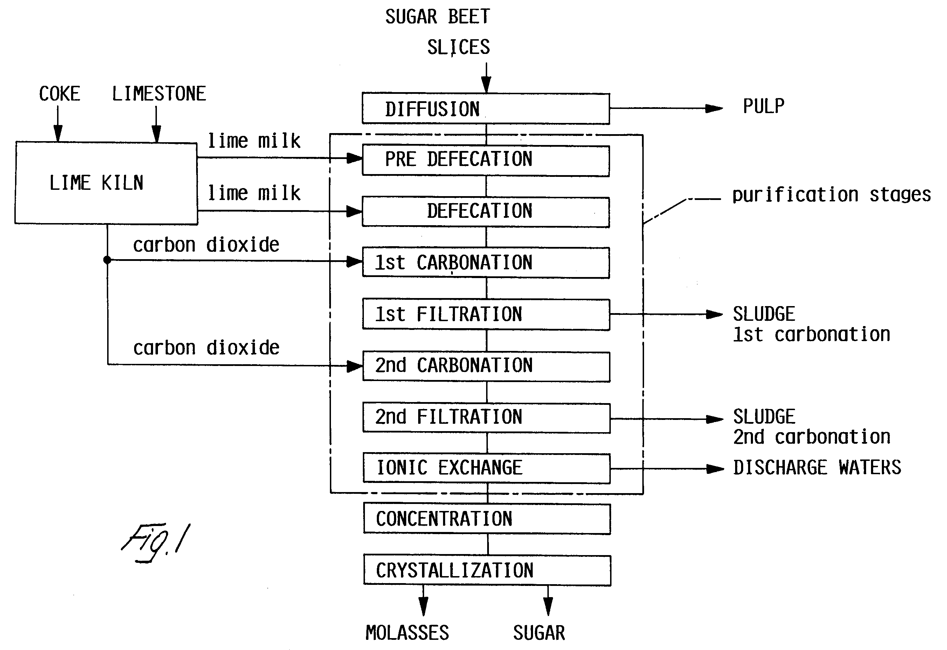

Sugar production technology from sugar beet, which was initiated about 200 years ago, in spite of having undergone important changes in particular during these last years thanks to plant automation and computerisation systems, has always remained anchored to a basic process scheme of the type shown in Fig. 1 of the annexed drawings. According to this process, the sugar solution obtained by a diffusion process after having brought into contact, under suitable conditions, the sugar beet slices with water, is added in two successive phases with a suitable amount of lime milk. The necessary amount of CaO may vary depending on the characteristics of the raw material, but, on the average, it is around 1 to 3 Kg of CaO per 100 Kg of sugar beet. In order to produce this considerable amount of lime every sugar factory has one or more lime kilns of appropriate capacity which are fed with limestone and coke (or any other type of combustible). An Italian middle-sized sugar factory, capable of processing 10,000 tons of sugar beet per day, uses an estimated 500 tons/day of limestone and 45 tons/day of coke. The lime kiln also supplies the CO₂ necessary for the subsequent I and II carbonation phases, each of which is followed by a filtration stage. Obviously, calcium carbonate is formed again and, in the amount of about 1,000 tons/day at 50% of dry substance, it represents a big problem from an ecological point of view.

Without going into the details of the described purification phases, which include complex recycling operations, heating and washing, one must bear in mind that only one part (from 20 to 40%) of the non-saccharose compounds is eliminated in this phase. Furthermore, it is necessary to keep in mind that the elevated temperature and pH conditions which are maintained cause the destruction of the monosaccharides present with the formation of acidic compounds, coloured compounds, and the elimination of ammonia in the atmosphere due to the decomposition of nitrogen compounds with particular reference to amides. Before moving on to the concentration phase of the solution thus partially washed out, phase which precedes the final part of crystallization, it is necessary, in the majority of cases, to subject the same solution to treatments with decalcifying ion exchange resins. If the special treatment schemes for such resins are not used there are pollution problems related to washings and regenerations. Such problems are particularly amplified in the case in which demineralization installations are taken into consideration. In the concentration of the juice thus washed out, it is, in addition, necessary to operate with very short permanence times over the various evaporating effects in order to avoid saccharose inversion and destruction which might occur at the elevated temperatures, of about 120°-130°C, at which the evaporation is carried out. This involves the use of considerable evaporating surfaces. From this it is clear that the washing out process in its entirety implies serious problems from an ecological, energetic, technological and installation point of view.

On the basis of the above, the possibility of directly concentrating and crystallizing the raw juice has been studied by completely skipping the various washing out phases indicated in Fig. 1. Obviously, it was necessary to anticipate extensive modification in the traditional concentration and crystallization techniques. In fact, the concentration process must be carried out in such a way as to provoke the least chemical modification in the raw juice with particular consideration for saccharose inversion and the crystallization must be carried out in such a way that the crystals incorporate in their interior the least possible amount of the impurities present in the concentrated raw juice.

In addition to the elimination of a part of the non sugars, the aim of the traditional washing out process is to make the juice "heat stable", that is fit for being subjected to the various temperatures which are present in the traditional concentration phase without undergoing drastic effects of chemical transformations with particular attention to saccharose inversion. The kinetics of saccharose inversion has been widely studied and the conditions which favour it are low pH values, low concentration values and elevated temperatures. Fig. 1 highlights the trend in the constant K as a function of the various parameters (G. Vaccari, G. Mantovani AVH ASSOCIATION - 1st Symposium - Reims, Nov. 1993).

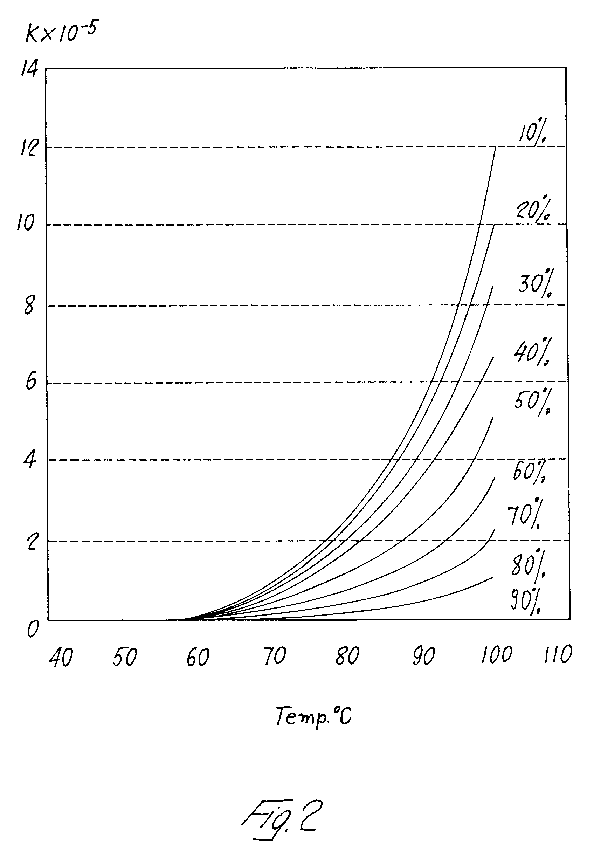

From Fig. 2 it is apparent that, bearing in mind that the pH and the concentration of the raw juice are two fixed parameters, the only possibility for keeping under control the kinetic constant K for the saccharose inversion reaction is the temperature. In order to maintain the K values at sufficiently low levels it is necessary to keep the concentration temperatures low up to dry subsance values of 50-60% and, only subsequently, suitably increase the temperature. In spite of such circumspections, a part of saccharose undergoes just the same the inversion with production of glucose and fructose.

The concentrated raw juice thus obtained appears as a practically black and muddy solution.

The expedient devised to obtain sufficiently clean crystals even from a particularly impure, coloured and muddy mother liquor has been a sufficiently slow crystallization. Industrially this can be accomplished only through a crystallization by cooling after having saturated the solution at elevated temperature.

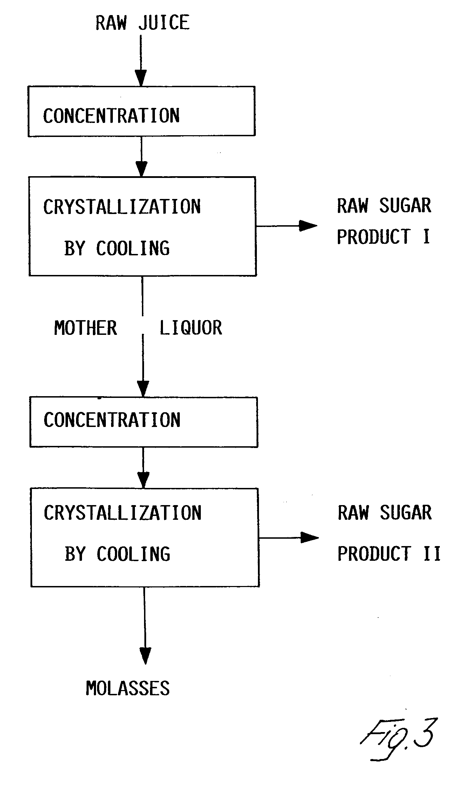

So, this brings to the process scheme reported in Fig. 3. (G. Vaccari, G. Mantovani, G. Sgualdino. "Processi Chimici Innovativi and tutela dell'ambiente" Congress Acts. Venice - 28.2/3-3, 1993).

The raw juice after concentration at low temperature and, therefore, under high vacuum, is brought to saturation condition at the temperature of about 85°C. After addition of the seed the first product and its corresponding mother liquor is obtained. The latter is subjected to a second stage of concentration and crystallization by cooling thus obtaining second product raw sugar and molasses. Thanks to the presence of all the non sugars which are normally eliminated during the traditional washing out process and in the presence of the inverted sugar, the solubility of saccharose turns out to be considerably decreased with the consequence that it is possible to obtain molasses at sufficiently low purity quotients to allow yields in crystalline sugar comparable to those obtained in the traditional technological cycle.

In carrying out the process of Fig. 3 one goes from a concentration system with only one effect, which enabled a discontinuous crystallization, to a two effect system which has provided the possibility of carrying out not only a continuous concentration, but also a continuous crystallization. The crystals obtained, apart from an interesting sharp-pointed morphology on the left pole, do not present appreciable phenomena of coloured inclusions. In order to be able to have a quality product comparable to the sugar presently on the market, the raw sugars obtained after affination, dissolution and filtration are subjected to a final crystallization process to obtain white commercial sugar.

In the work by G. Vaccari, G. mantovani, G. Sgualdino and F. Andreoli presented at the Helsinki congress in August 1994, (Conference on Sugar Processing Research), are published data relative to the running of a pilot plant for sugar production from raw juice from which it results that, in the juice concentration phase at low temperature under vacuum, the percentage of inverted saccharose referred to total saccharose (about 2.3%) plus that of destroyed saccharose (about 0.6%) is in the range of 3% by weight, while the percentage of inverted after the first concentration phase is of about 1.4% by weight.

The percentage of inverted saccharose (as referred to total saccharose) in the concentration stage carried out at low temperature (35°-50°C., pressure from 5 to 10 KPa) in which there should be no inversion given the low temperature employed (in reference to this see the kinetic constant K values reported in Fig. 2) has been of about 1.4%, while it was of about 0.9% the percentage increase of inverted as referred to the stage operating at more elevated temperature and concentrations (88°-95°C; 34-40 KPa) and 0.5% the percentage of saccharose destroyed at this stage. Two evaporators joined in parallel or in counter-current were employed.

The evaporator operating at the lower temperature was tubular calandria type, the other was a filter press plate evaporator.

The permanence time in the tubular calandria evaporator was 4 hours and in a filter press plate evaporator was 1 hour.

In order to reduce the saccharose inversion and destruction, the plan is to considerably decrease the permanence times in the subsequent sugar campaign. However, no indicative operating data are supplied.

It is also anticipated the use of a battery of filter press plate exchangers operating in counter-current. This to cope with an increase in the capacity of the plant.

According to the present invention, it has been surprisingly found that by carrying out the concentration of the sugar beet raw juice over a battery of multiple-effect filter press plate exchangers and by feeding the raw juice with counter-current concentration, it is possible to drastically reduce saccharose inversion both on the effect which operates at the lower temperature and in those employing more elevated temperatures, by operating with permanence times of the juice over the individual effects lower than of about 30 minutes.

The amount of inverted saccharose is in the range of a fraction of a percentage point. The destruction of saccharose is practically nil.

The result is so much more surprising if one considers that from the experimental data of the preceding trials, the saccharose inversion is significant even when operating in temperature conditions at which there should be no appreciable inversion as it could be deduced from the data reported in the literature (see Fig. 2).

Furthermore, it has been found, and this constitutes another aspect of the invention, that though operating with relatively short permanence times which might result insufficient to cause the explosion of the micro-organism cell wall, there is practically no production and spreading of bacterial infections.

The bacterial counts of the juice in the various effects record a stability in the total number of micro-organisms.

It must be noted that the spreading of bacterial infections could lead to the formation of volatile acids (acetic, propionic, butyric) whose presence in the condensates would create serious problems in their recycling and disposal.

It has also been found, and this constitutes a further aspect of the invention, that by operating with relatively short permanence times it is possible to carry out the evaporation with a degree of lower thrust vacuum than what has been employed so far.

Further objects and characteristics of the invention will be evident from the following detailed description of the invention, made with reference to the attached drawings, in which:
Figure 1 is a scheme of the prior art technique for the treatment of the sugar beets.
Figure 2 is a diagram showing the variation in the saccharose kinetic inversion constant K as a function of temperature at different concentrations and at pH 6.
Figure 3 is a scheme of a known two-effect process, and
Figure 4 is a battery of evaporation according to the invention, operating on three effects.

According to the invention, the first effect in which the diluted juice is concentrated can operate with an no thrust vacuum equal to about 20 KPa, corresponding to temperatures of about 60°C, without the occurrence of a significant increase in saccharose inversion.

Conditions of lower thrust vacuum allow the treatment of vapours with a considerably reduced specific volume with consequent size improvements of the plant.

Relatively short permanence times, for instance lower than 2 minutes, can be obtained by reducing the amount of juice circulating in the evaporating system.

The pH of the raw juice is generally between 5.5 and 6.5 and does not sensitively vary during the concentration phase.

The multiple-effect evaporating system can include from three to more effects (by increasing the number of effects there is an improvement in energy saving). The use of 4 to 6 effects turns out to be convenient.

The conditions of temperature, pressure and permanence times which can be used in a three effect system are as an indication included within the following intervals:
- - 1st effect:: temperature between about 35°C and 60°C, preferably between 40° and 50°C with vacuums of 5-10 KPa and permanence times of 3-4 minutes;
- - 2nd effect:: temperature between about 50°-65°C, with a vacuum between 12-20 KPa and permanence times of 4-6 minutes;
- - 3rd effect:: temperature between about 75°-85°C, vacuum of 25-40 KPa and permanence times of 10-15 minutes.

By properly regulating the ratio between the evaporating surfaces of the various effects it is possible to obtain a convenient progression in concentration.

For instance by operating on three effects, the ratio between the surfaces of the 1st, 2nd and 3rd effect can be 1:0.6-0.7:1.5-1.7.

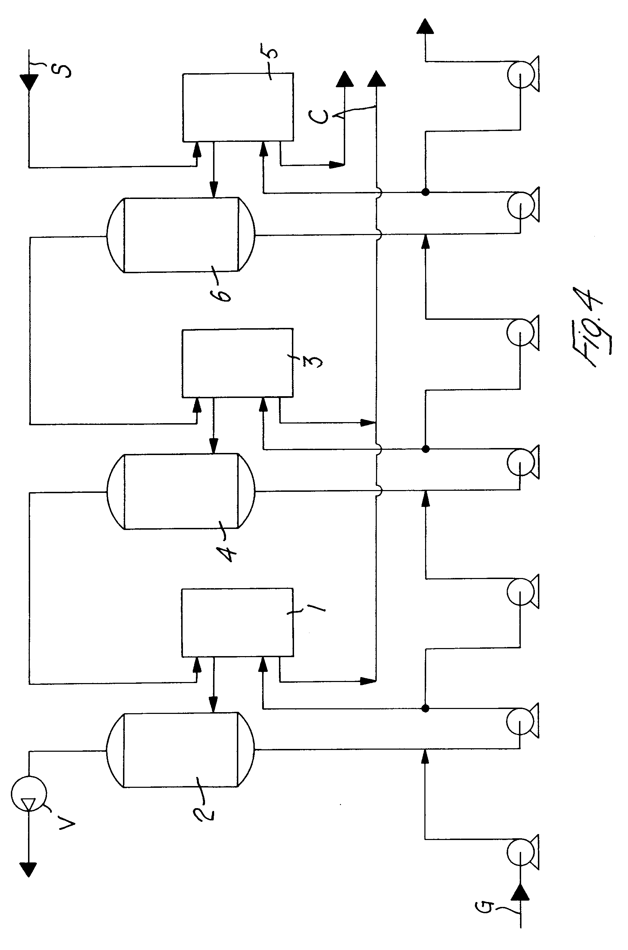

In Fig. 4 is represented a battery of evaporation with 3 evaporation effects or rings. Each effect consists of a filter press plate evaporator and is indicated with 1, 3 and 5 and by an expansion reservoir 2, 4 and 6.

The expansion reservoir 2 is connected to vacuum group **V**; the vapour of production S enters in 5 at 1.47 Kg/cm² and 110°C.

The raw juice G coming from the counter-current diffusion of the sugar beet passes over evaporator 1 operating at a lower temperature with respect to that of the other effects; subsequently the juice feeds evaporators 2 and 3 operating at increasing temperatures and leaves evaporator 5 at the desired degree of saturation.

With C the various condensates are indicated.

The filter press plate evaporator technology has been employed for some time in the sugar industry.

The article published in ZUCKERIND 114 No. 10, 785-798 (1989) reports the results of an experiment with filter press plate evaporators in the concentration of the thick juice from sugar beet.

The filter press plate evaporators used in the article, whose description with regard to the evaporators is included here through a reference, are an example of evaporators which can be used in the process of the invention. The Alfa-Laval evaporators are the preferred ones.

The concentrated raw juice is passed to a seeding system where, by appropriately regulating the heat supply and the degree of vacuum, the concentration conditions and the appropriate temperatures for seeding are adjusted (for instance 86 BX and 85°C). The seeding is carried out with the introduction of crystalline germs of saccharose (for instance saccharose powder dispersed in glycerine).

The crystallization of the juice is carried out by cooling, bringing the temperature of the magma from its saturation value to about 30°-40°C, and operating in crystallizers which carry out programmed cooling curves.

The magma obtained is centrifuged, thus obtaining first product raw sugar and syrup.

The syrup is again concentrated, seeded and crystallized; the resulting magma is centrifuged, thus obtaining second product raw sugar and final molasses. The concentration process is carried out by operating at 80°-95°C, under a vacuum of 25-50 KPa. The first and second product sugars, contrary to those obtained according to the experimental process presented at the Helsinki congress, are in a crystalline form which is not sharp-pointed, conforming to the normal production sugar.

The 1st and 2nd product raw sugars are then refined according to the traditional process to obtain white commercial sugar.

The molasses thus obtained present a high ratio by weight between the non sugar products, and glucose and fructose. The ratio between the non sugar products and the sugar products expressed as the glucose and fructose sum is greater than 5, generally between 6 and 20, more preferably between 8 and 15.

The following example is given as an illustration and not limiting the invention.

### EXAMPLE

The raw juice coming from the diffusion of the sugar beet is concentrated in a battery of 3 effect evaporation operating according to the scheme riported in Fig. 4.
The operative conditions used are the following:

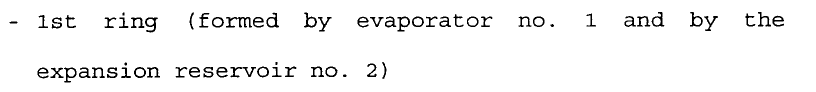

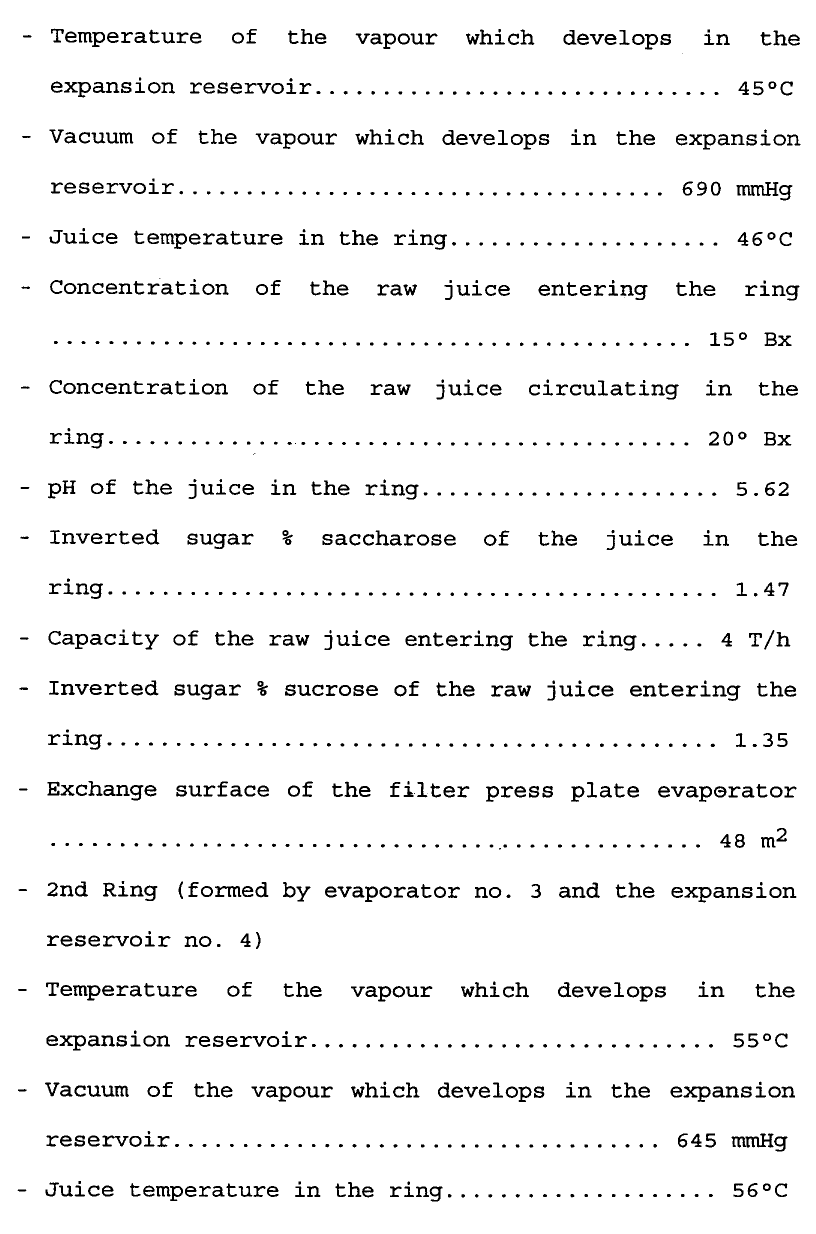

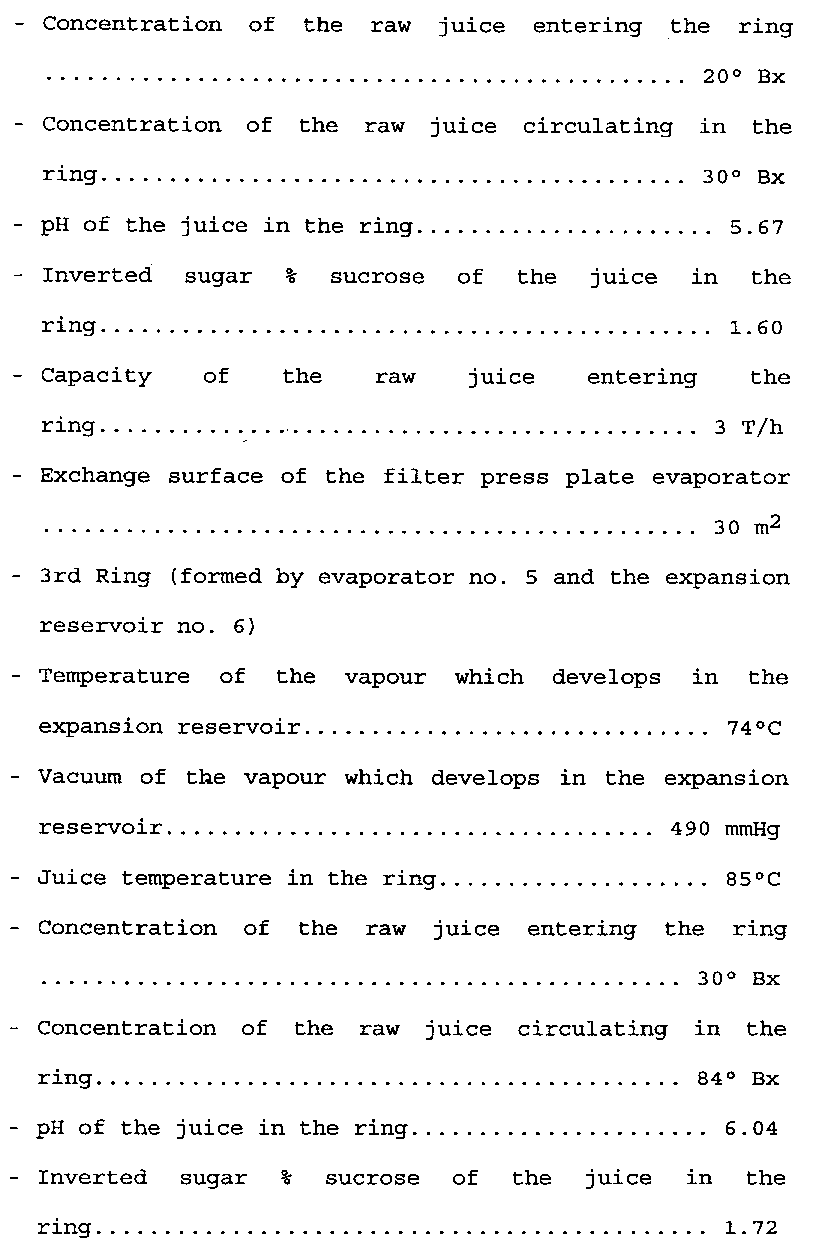

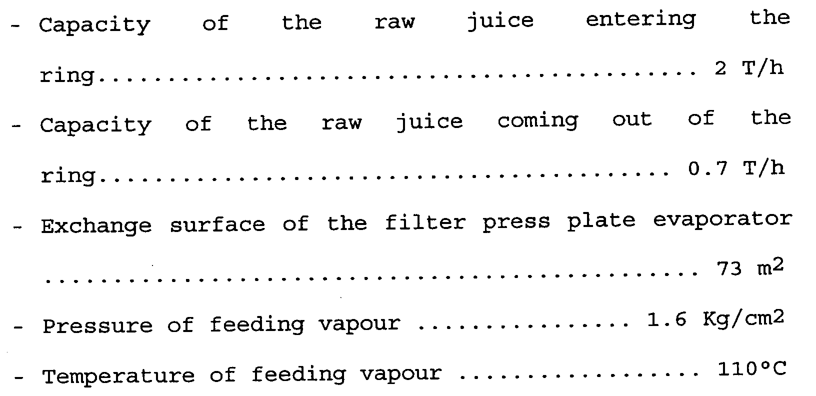

## Claims

1. Process for the production of sugar from raw juice from sugar beet in which the juice is concentrated by evaporation under vacuum and the thick juice obtained is crystallized by cooling the solution and in which the evaporation under vacuum is carried out over more than one effects each of which includes a filter press plate exchanger and by an expansion tank, and the juice is fed with concentration in counter-current with evaporation of the more diluted juice at the lower temperatures, characterized by the fact that the permanence time of the juice in each effect is less than about 30 minutes and that the thick juice coming out of the last exchanger has a degree of saturation included between about 78 and 90 BX corresponding to temperatures included between about 80°C and 95°C.

2. Process according to claim 1 in which the concentration is carried out over three effects and the juice is brought to between about 20 and 25 BX in the first effect and between 25 and 40 BX in the second effect and the thick juice coming out has a degree of saturation included between 80 and 85 BX.

3. Process according to claim 2 and 3 in which the temperature and vacuum values in the first effect are between 40°-50°C and between 8-10 KPa, and between 50°-65°C and between 18-20 KPa in the second effect, and the thick juice coming out has a degree of saturation of 82-85 BX.

4. Process according to claim 3 in which the ratio between the evaporating surface between the 1st, 2nd and 3rd effect is 1 : 0.6 - 0.7 : 1.5 - 1.7.

5. Procedure according to the preceding claims in which the permanence times are of 3-5 minutes over the first and second effect and of 10-15 minutes over the last effect.

6. Process according to claim 1 in which the concentration is carried out over a system from 4 to 6 effects.

7. Process according to the preceding claims in which the thick juice is brought to saturation at a temperature between 80° and 90°C and, after the addition of crystallized seed, and concentration of the juice up to supersaturation, it is cooled at about 30°-40°C and the resulting magma is centrifuged thus obtaining first product raw sugar and syrup which is then seeded again and crystallized and the resulting magma is centrifuged thus obtaining second product raw sugar and molasses.

8. Process according to claim 7 in which the concentration of the syrup is carried out by evaporation under vacuum operating between 80°-95°C and a vacuum between 25-50 KPa with permanence times less than 30 minutes.

9. Process according to claims 7 and 8 in which the 1st and 2nd product raw sugars are refined according to traditional processes.

10. Sugar obtained according to the process of claims from 1 to 9.

11. Molasses in which the ratio by weight between non sugar parts and sugar parts expressed as the sum of glucose and fructose is greater than 6 and less than 20.
